# EUROPÄISCHE PATENTSCHRIFT

(11) **EP 0 698 437 B1**
(45) Veröffentlichungstag und Bekanntmachung des Hinweises auf die Patenterteilung: **13.01.1999**
(21) Anmeldenummer: 95110614.5
(22) Anmeldetag: 07.07.1995
(51) Int. Cl.: B23C 5/22, B23C 5/10

(54) **Formschlüssig gesicherte Schneidplatte**
Positively fixed cutting insert
Plaquette de coupe fixée positive

(30) Priorität: 25.08.1994 DE 4430171
(43) Veröffentlichungstag der Anmeldung: 28.02.1996
(73) Patentinhaber: WALTER AG, D-72072 Tübingen (DE)
(72) Erfinder: Deiss, Siegfried, D-72810 Gomaringen (DE); Bohnet, Siegfried, D-72116 Mössingen (DE); Dürr, Hans Peter, D-72810 Gomaringen-Stockach (DE); Schneider, Thomas, D-72145 Hirrlingen (DE)
(74) Vertreter: Rüger, Rudolf, Dr.-Ing.

(56) Entgegenhaltungen:
- DE-U- 9 201 113
- DE-U- 9 305 518
- US-A- 5 236 288

## Beschreibung

Bei der spanenden Bearbeitung von Werkstücken werden als Schneidwerkzeug häufig in einem Zerspanungswerkzeug gehaltene Schneidplatten verwendet, die als Rundplatten ausgebildet sind. Diese Zeichnen sich durch eine kreisförmige, konzentrisch zu ihrer Längsmittelachse liegende Schneidkante aus. Die Rundplatten sind bezüglich der Längsmittelachse rotationssymmetrisch ausgebildet und weisen eine koaxial zu der Längsmittelachse liegende Befestigungsöffnung auf. Diese wird in eingebautem Zustand von einer Befestigungsschraube durchgriffen, mittels derer die Rundplatte in einer entsprechenden Aufnahme des Zerspanungswerkzeuges gehalten wird. Dabei wird die Rundplatte häufig so fixiert, daß ihre Längsmittelachse unter einem spitzen Winkel zu der Richtung der Relativbewegung zwischen Werkzeug und Werkstuck steht. Dies hat zur Folge, daß die Schneidkante nicht in einem rechten Winkel zu der Bewegungsrichtung stehend fortbewegt wird, so daß beim Zerspanen auf die Rundplatte wirkende Reaktionskräfte entstehen, die eine in Umfangsrichtung der Rundplatte wirkende Kraftkomponente aufweisen können.

Eine solche Kraftkomponente erzeugt ein auf die Rundplatte wirkendes Drehmoment, das zu einer Verdrehung der Rundplatte fuhren kann, wenn es nicht vollständig in das Zerspanungswerkzeug abgeleitet wird. Eine Verdrehung der Rundplatte kann aber je nach Drehrichtung zu einem Lösen der Befestigungsschraube oder zu einem derartig festen Anziehen derselben führen, daß sie nicht mehr gelöst werden kann. Eine gelöste Rundplatte kann das übrige Fräswerkzeug beschädigen oder zerstören und muß unbedingt vermieden werden. Ebenso muß das unbeabsichtigte Anziehen und Festklemmen der Befestigungsschraube unterbleiben.

Aus der Praxis sind für Fräswerkzeuge vorgesehene Rundplatten mit einem ringförmigen Grundkörper und formschlüssiger Kopplung zwischen der Rundplatte und einem Fräserkörper bekannt. Die Rundplatte weist eine plan ausgebildete Grundfläche und eine im Abstand zu dieser an der Gegenseite des Grundkörpers angeordnete ringförmige Spanfläche auf. Zwischen der Span- und der Grundfläche ist eine gekrümmte Seitenfläche angeordnet, die sich um den Umfang des ringförmigen Grundkörpers erstreckt. Die Seitenfläche ist mit aneinander grenzenden Planflächen versehen, die schräg zueinander und zu der Grundfläche angeordnet sind, so daß die Seitenfläche bei der Grundfläche polygonal und bei der Spanfläche durch die kreisförmige Schneidkante begrenzt ist. Entsprechend ist die in dem Fräswerkzeug vorgesehene Aufnahmetasche mit einer polygonal ausgebildeten Wandung versehen, an der die Seitenwand der Rundplatte anliegt, so daß die Rundplatte in formschlüssiger Verbindung mit dem Körper des Fräswerkzeuges steht.

Ein auf diese Rundplatte wirkendes Drehmoment wird durch die sich an der Wandung abstützenden Planflächen in eine auf die Befestigungsschraube wirkende Radialkraft übersetzt, die zu einer Dejustage der Rundplatte in dem Fräswerkzeug führen kann.

Aus dem DE-U 93 05 518.3 ist eine ähnliche Rundplatte bekannt, die an ihrer hier als Umfangsfläche bezeichneten Seitenfläche insgesamt acht Planflächen aufweist, die als Positionierflächen für die Rundplatte in dem Fräswerkzeug dienen. Die Rundplatte ist durch die an entsprechenden Anlageflächen des Fräsers anliegenden Positionierflächen gegen Verdrehung gesichert, wobei aus einem auf die Rundplatte wirkenden Drehmoment auch hier radiale Reaktionskräfte entstehen können.

Ebenfalls der Positionierung und Sicherung gegen Verdrehung einer in der EP-B 0 432 340 beschriebenen polygonalen Schneidplatte dienen seitlich vorgesehene Positionierflächen.

Darüber hinaus ist aus der DE-C 36 42 514 eine polygonale Schneidplatte mit bogenförmigen Schneidkanten bekannt, die insgesamt drei in einer sich zwischen einer planen Oberseite und einer dazu parallelen planen Grundfläche erstreckenden Seitenfläche vorgesehen sind. Die Anlage- oder Positionierflächen sind in einer zu der Grundfläche parallelen Ebene gekrümmt, wobei der Krümmungsradius größer ist als der Krümmungsradius der jeweiligen übrigen Seitenfläche. Die Positionierflächen stützen sich an entsprechend gewölbten an dem Fräswerkzeug vorgesehenen Flächen ab. Entstehende Reaktionskräfte werden von einer die Schneidplatte bei einer zentralen Öffnung durchgreifenden Befestigungsschraube aufgenommen und in das Fräswerkzeug abgeleitet.

Solche Schneidplatten sind auch aus der EP-A 3O7 949 bekannt, wobei die Anlage- oder Positionierflächen jedoch plan ausgebildet sind und mit entsprechenden, ebenfalls plan ausgebildeten Sitzflächen eines Kugelfräsers in Anlage stehen. Auch hier können an den Anlage- oder Positionierflächen wie bei den vorstehend beschriebenen Fräswerkzeugen auf die Schneidplatte wirkende Keilkräfte entstehen.

Eine grundsätzlich andere Art der Sicherung von Rundplatten gegen Verdrehung ist aus dem DE-U 92 01 113.6 bekannt. Aus diesem geht eine im wesentlichen kegelstumpfförmige Schneidplatte mit einer planen Oberseite und einer auf einem Kegelmantel liegenden Seitenfläche hervor. An die Seitenfläche schließt sich eine Grundfläche an, die mit sich bezüglich der Symmetrieachse der Rundplatte radial erstreckende Nuten versehen ist. Dabei sind die Nuten gleichmäßig verteilt, so daß jeweils zwei miteinander benachbarte Nuten miteinander den gleichen Winkel einschließen wie zwei beliebige andere einander benachbarte Nuten. Durch die Schneidplatte führt eine zentrale Öffnung zur Aufnahme einer Befestigungsschraube. An einem zur Aufnahme der Schneidplatte vorgesehenen Zerspanungswerkzeug ist eine Aufnahmetasche mit einer Sitzfläche vorgesehen, in die ein Stift eingesetzt ist, der in eine der Nuten greift, wenn die Schneidplatte an dem Zerspanungswerkzeug befestigt ist.

Anstelle der Nuten können an der Grundfläche auch sogenannte nach allen Selten begrenzte kleine Versenkungen vorgesehen sein, die den Stift aufnehmen.

Es ist erforderlich, an dem Zerspanungswerkzeug einen gesonderten Paßstift vorzusehen. Außerdem ist bei dieser Schneidplatte die als Anlagefläche dienende Grundfläche, die bei dem Einsatz des Fräswerkzeuges einer erheblichen Flächenpressung ausgesetzt ist, in ihrer Größe durch die Ausnehmungen reduziert. Die auf die der Grundfläche zugeordnete, an dem Grundkörper des Fräswerkzeuges vorgesehene Sitzfläche wirkende Kraft wird dadurch ungleichmäßig verteilt.

Aus der EP-A 545 669 ist eine ähnliche Schneidplatte bekannt, die einen zylindrischen Grundkörper mit einer mittigen Befestigungsöffnung aufweist. Der Grundkörper ist an seiner Grundfläche mit insgesamt vier sich radial nach außen erstreckenden Nuten versehen, von denen eine mit einem entsprechenden in der Sitzfläche des Zerspanungswerkzeuges vorgesehenen Paßstift zusammenwirkt.

Auch hier ist es erforderlich, an dem Zerspanungswerkzeug einen gesonderten Paßstift vorzusehen und es ergibt sich ebenfalls eine ungleichmäßige Kraftverteilung auf der Sitzfläche.

Außerdem ist es aus der Praxis bekannt, bei Rundplatten zur formschlüssigen Verdrehsicherung derselben in einem Zerspanungswerkzeug Ausnehmungen in der Seitenfläche vorzusehen. Diese wirken mit entsprechenden, an dem Zerspanungswerkzeug vorgesehenen Vorsprüngen zusammen, die an einer seitlichen Abstützfläche vorgesehen sind. Diese müssen, damit die seitliche Abstützfläche ihre Stützaufgabe erfüllen kann, sehr genau ausgearbeitet seid.

Schließlich ist es aus der Praxis bekannt, Schneidplatten ohne zentrale Öffnung an einem Werkzeuggrundkörper mittels Klemmpratzen zu befestigen, wobei diese in eine zentrale, in der Oberseite der Schneidplatte vorgesehene Vertiefung eingreifen. Mittels der Klemmpratze wird die Schneidplatte gegen eine an dem Werkzeuggrundkörper vorgesehene Sitzfläche gepreßt und an dieser gehalten.

Von der eingangs dargestellten Problemstellung ausgehend ist es Aufgabe der Erfindung, eine Schneidplatte für ein Zerspanungswerkzeug zu schaffen, die an dem Zerspanungswerkzeug befestigbar und dabei sicher an diesem gehalten ist und die insbesondere auf einfache Weise gegen Verdrehung sicherbar ist.

Diese Aufgabe wird durch eine Schneidplatte mit den Merkmalen des Patentanspruches 1 gelöst.

Die Schneidplatte kann in ein Zerspanungswerkzeug verdrehsicher eingebaut werden. Die drehfeste Sicherung der Schneidplatte durch das Kupplungsmittel gestattet es, die Schneidplatte, bezogen auf die Richtung der Relativbewegung zwischen dem Zerspanungswerkzeug und dem Werkstück, schräg anzustellen, wobei Umfangskomponenten der dadurch entstehenden Kräfte von dem formschlüssigen Kupplungsmittel in den Grundkörper des Zerspanungsdwerkzeuges abgeleitet werden. Die Schneidplatten verdrehen sich deshalb während der Bearbeitung eines Werkstückes nicht; die beispielsweise als Befestigungsmittel dienende zentrale Befestigungsschraube wird damit weder gelockert noch angezogen.

Weil die formschlüssige Sicherung der Schneidplatte in dem Grundkörper des Zerspanungswerkzeuges ausschließlich von der Oberseite her erfolgt, kann die ringförmige Grundfläche der Schneidplatte durchgehend, d.h. ohne Unterbrechungen wie Nuten, Bohrungen od.dgl., ausgebildet werden. Damit liegt die Grundfläche durchgehend an einer dieser zugeordneten, an dem Zerspanungswerkzeug vorgesehenen Sitzfläche an. Die Sitzfläche unterliegt deshalb nicht lediglich einer bereichsweisen, sondern einer durchgehenden Flächenpressung durch die auf Schneidplatte wirkenden erheblichen Schnittkräfte. Durch die gleichmäßige Belastung wird sie nicht deformiert und damit nicht beschädigt. Insbesondere ist die Ausbildung von Stufen, Kanten, Absätzen od.dgl., wie es vorkommen kann, wenn in der Grundfläche einer Schneidplatte Nuten oder Ausnehmungen vorgesehen sind, im Bereich der Sitzfläche ausgeschlossen.

Entsprechendes gilt für die Wirkung der Seitenfläche der Schneidplatte auf die entsprechende, an dem Zerspanungswerkzeug vorgesehene Anlagefläche. Auch hier kann eine flächige Anlage herbeigeführt werden, wobei weder an der an der Schneidplatte vorgesehenen Seitenfläche noch an der dieser zugeordneten Anlagefläche Druckmarken entstehen.

Sowohl an der Sitzfläche des Zerspanungswerkzeuges als auch an der an diese angrenzenden Anlagefläche sind keinerlei Kupplungsmittel wie Vorsprünge, Ausnehmungen u.dgl. erforderlich, so daß beide Flächen glatt ausgebildet werden können. Insbesondere sind keine in das Zerspanungswerkzeug eingesetzten Paßstifte od. dgl. erforderlich. Deshalb können bedarfsweise auch herkömmliche Schneidplatten ohne Verdrehsicherung verwendet werden, wenn der konkrete Einsatzfall eine solche nicht erfordert. Dies kann gegeben sein, wenn mit geringeren Schnittgeschwindigkeiten gearbeitet wird, Werkstücke mit weicherem Material zu bearbeiten sind oder aus anderweitigen Gründen das auf die Schneidplatte wirkende Drehmoment gering ist.

Das formschlüssig wirkende Kupplungsmittel kann so ausgebildet werden, daß es die Wirkung des die Schneidplatte durchgreifenden Befestigungsmittels unterstützt und zusätzlich zu der Verdrehsicherung eine Arretierung der Schneidplatte in dem Fräswerkzeug bewirkt. Insbesondere wenn es außermittig an der von der aktiven Schneidkante abliegenden Teil der Schneidkante an der Schneidplatte angreift, kann es eine Kippsicherung bewirken, durch die eine Vorlast auf die Schneidplatte ausgeübt wird, die der Kippneigung der Schneidplatte entgegenwirkt.

Die Schneidplatte ist vorzugsweise eine sogenannte Rundplatte, bei der der Grundkörper in einem zwischen der Grundfläche und der Oberseite liegenden Bereich einen wenigstens abschnittsweise kreisförmigen Querschnitt aufweist, der parallel zu der Grundfläche liegt. Es ergeben sich dann kreisbogenförmige Schneidkanten. Wenn der Querschnitt durchgehend kreisförmig ist, handelt es sich um eine Schneidplatte ohne Ecken. Diese zeichnen sich durch eine hohe Zerspanungsleistung bei niedrigem Verschleiß aus. Sie weisen eine kreisförmige Schneidkante auf, die zwischen der von der Seitenfläche gebildeten Freifläche und der in der Oberseite enthaltenen Spanfläche gebildet ist.

Obwohl es auch möglich ist, die Grundfläche mit einer polygonalen Berandung zu versehen, ist es doch vorteilhaft, wenn diese kreisförmig ist. Der Grundkörper ist dann im wesentlichen kegelstumpfförmig, wie es bei Rundplatten mit positivem Freiwinkel ohne Verdrehsicherung der Fall ist.

Die vorzugsweise parallel zu der Oberseite ausgerichtete Grundfläche kann plan ausgebildet sein, was sowohl die Herstellung der Schneidplatte als auch die Herstellung und Bearbeitung des zur Aufnahme der Schneidplatte vorgesehenen Grundkörpers des Zerspanungswerkzeuges vereinfacht. Außerdem weist die Grundfläche dann keine die Sitzfläche bei Druckbelastung deformierende Struktur auf. Es können sich keine Absätze oder Kanten in die Sitzfläche einarbeiten oder an dieser abformen.

An die Schneidkante kann sich eine kreisringförmige Spanfläche anschließen, die entweder plan und somit parallel zu der Grundfläche oder gegen die Grundfläche geneigt ausgebildet ist, wobei sie dann auf einem Mantel eines stumpfwinkligen Kreiskegels liegt. Bedarfsweise kann die Spanfläche auch sphärisch konkav gewölbt sein.

Das der formschlüssigen Sicherung der Schneidplatte in dem Zerspanungswerkzeug dienende Kupplungsmittel kann durch wenigstens eine an der Oberseite des Grundkörpers vorgesehene Ausnehmung gebildet sein. In diese Ausnehmung kann dannn ein entsprechend ausgebildetes Gegenstück greifen, das mit dem Zerspanungswerkzeug lösbar verbunden ist. Auf die Schneidplatte wirkende Drehmomente werden von dem Gegenstück aufgenommen. Ebenso kann das Kupplungsmittel durch einen an der Oberseite des Grundkörpers vorgesehenen Vorsprung gebildet sein, wobei das Gegenstück dann eine entsprechende, den Vorsprung aufnehmende Ausnehmung enthält.

Es ist vorteilhaft, wenn das Kupplungsmittel derart ausgebildet ist, daß die Schneidplatte in mehreren, sich voneinander durch eine Drehung um eine senkrecht auf der Ebene der Grundfläche stehende Symmetrieachse unterscheidenden Drehstellungen drehfest an dem Zerspanungswerkzeug gesichert werden kann. Damit kann die Schneidplatte, deren Schneidkante beim Zerspanen lediglich bereichsweise mit einem Werkstück im Eingriff kommt, bei Verschleiß dieses Abschnittes der Schneidkante weitergedreht und in einer neuen Drehstellung wieder drehfest an dem Zerspanungswerkzeug gesichert werden. Dies kann erreicht werden, indem das Kupplungsmittel eine Gruppe voneinander beabstandeter Ausnehmungen oder Vorsprünge enthält, die vorzugsweise auf einem konzentrisch zu der Symmetrieachse liegenden Kreis angeordnet sind. Wenn sie dort in gleichen Winkelabständen von beispielsweise 60° oder 45° liegen, kann die Schneidplatte in sechs oder acht Stellungen drehfest gesichert werden. Das Kupplungsmittel, also die wenigstens eine Ausnehmung oder der wenigstens eine Vorsprung, können abschnittsweise in bzw. auf der Spanfläche angeordnet sein, wobei sich gezeigt hat, daß der Spanfluß dadurch nur unwesentlich behindert wird. Auch das für das Kupplungsmittel erforderliche Gegenstück behindert den Spanfluß nicht nennenswert.

Darüber hat sich jedoch gezeigt, daß insbesondere wenigstens teilweise in der Spanfläche liegende, als Kupplungsmittel dienende Ausnehmungen den Spanfluß verbessern. Die Kupplungsmittel können bei entsprechender Ausbildung Kühlschmierstoff speichern, der den Spanfluß begünstigt.

Die Ausnehmungen können oval ausgebildet sein, wobei sich deren Längsmittelachse dann in radialer Richtung erstreckt. Dadurch wird von dem Gegenstück keine Radialkraft auf die Schneidplatte ausgeübt, sondern lediglich das Drehmoment aufgenommen. Geringfügige Maßtoleranzen zwischen dem Gegenstück, dem Grundkörper des Zerspanungswerkzeuges und der Schneidplatte werden dadurch ausgeglichen. Außerdem kann sich in den nicht mit dem Gegenstück verklemmten Ausnehmungen Kühlschmierstoff halten, der zur Schmierung des darüberlaufenden Spans beiträgt.

Wenn die an der Oberseite des Schneidwerkzeuges vorgesehene Ausnehmung mit einem stumpfen Winkel in die übrige Oberseite des Grundkörpers übergeht, kann ein zusätzlicher Klemmeffekt bewirkt werden. Das Gegenstück greift beispielsweise mit einer sphärisch konvex gewölbten Fläche in die Ausnehmung ein, wobei ein auf die Schneidplatte wirkendes Drehmoment über den schräg zu der Oberseite des Grundkörpers liegenden Randbereich der Ausnehmung eine Keilwirkung erzielt, die die Schneidplatte auf die Sitzfläche preßt. Damit wird das auf die Schneidplatte wirkende Drehmoment in eine die Wirkung der Befestigungsschraube unterstützende Anpreßkraft transformiert, die eine Verdrehung der Schneidplatte über die an der Sitzfläche auftretende Haftreibung verhindert.

Das Kupplungsmittel kann auch eine konzentrisch zu dem Grundkörper angeordnete Ausnehmung sein, die beispielsweise sich radial erstreckende Ausläufer aufweist, in die ein Gegenstück eingreift. Diese Ausnehmung kann quer zu der Umfangsrichtung des Grundkörpers orientierte Seitenwände aufweisen, die entweder rechtwinklig zu der Grundfläche stehen oder, wenn ein zusätzlicher Keileffekt gewünscht wird, schräg zu der Grundfläche orientiert sind.

An der Schneidplatte kann wenigstens eine die Identifizierung einer Drehstellung gestattende Einrichtung vorgesehen sein. Diese kann eine optisch ablesbare Marke sein, die beispielsweise durch eine sich optisch erkennbar von den anderen Ausnehmungen unterscheidende Ausnehmung gebildet ist. Diese ermöglicht es, die Schneidplatten definiert einzustellen. Außerdem kann sie zur Identifikation der Schneidplatte benutzt werden, um so bspw. Schneidplatten mit unterschiedlichem Spanwinkel voneinander zu unterscheiden.

Die Schneidplatte kann für ein Zerspanungswerkzeug verwendet werden, das ein mit dem Kupplungsmittel in Eingriff bringbares Sicherungsmittel, wie beispielsweise das vorgenannte Gegenstück, aufweist. Dieses kann als Spannpratze ausgebildet werden, die an ihrer der Schneidplatte zugewandten Seite einen zu dem Kupplungsmittel komplementär ausgebildeten Abschnitt aufweist. Die Spannpratze kann dabei so ausgebildet sein, daß sie einen senkrecht auf die Oberseite der Schneidplatte wirkenden Druck ausübt, durch den die Schneidplatte zusätzlich an die Sitzfläche angepreßt wird. Dies bewirkt, daß die Schneidplatte, auch wenn sie beim Zerspanen beispielsweise einer starken Wechselbelastung unterliegt, sicher an der Sitzfläche anliegt, ohne durch die Schneidkräfte zu kippen. Damit wird die Arretierung der Schneidplatte in dem Zerspanungswerkzeug, das beispielsweise ein Fräswerkzeug sein kann, erheblich verbessert.

In der Zeichnung ist ein Ausführungsbeispiel der Erfindung dargestellt. Es zeigen:
Fig. 1 ein mit als Rundplatten ausgebildeten Schneidplatten ausgestattetes Fräswerkzeug, bei dem den Schneidplatten Spannpratzen zur drehfesten Sicherung derselben in dem Fräswerkzeug zugeordnet sind, in perspektivischer und vergrößerter Darstellung,
Fig. 2 das Fräswerkzeug nach Fig. 1 mit abgenommenen Schneidplatten, so daß entsprechende Sitz- und Anlageflächen sichtbar sind,
Fig. 3a die in dem Fräswerkzeug nach Fig. 1 vorgesehene Schneidplatte in Draufsicht auf ihre Oberseite, in einer vergrößerten Darstellung,
Fig. 3b und 3c die in dem Fräswerkzeug nach Fig. 1 vorgesehene Schneidplatte in einer Schnittdarstellung geschnitten entlang einer Ebene, die die Symmetrieachse der Schneidplatte enthält sowie in einer ausschnittsweisen, stark vergrößerten Schnittdarstellung,
Fig. 4a eine Schneidplatte in einer anderen Ausführungsform und in schematisierter Darstellung in Draufsicht,
Fig. 4b, 4c und 4d die Schneidplatte nach Fig. 4a in einer Schnittdarstellung, geschnitten entlang einer die Symmetrieachse enthaltenden Ebene in unterschiedlichen Maßstäben,
Fig. 5 eine mit der Schneidplatte nach den Fig. 3a, 3b, 3c in Verbindung stehende Spannpratze, in einer Ansicht von unten in vergrößerter Darstellung,
Fig. 6 die Spannpratze und die Schneidplatte nach Fig. 5 in einer geschnittenen Darstellung,
Fig. 7 eine Schneidplatte mit einer an ihrer Oberseite vorgesehenen, als Kupplungsmittel dienenden Ausnehmung und einer in diese Ausnehmung greifenden Spannpratze in schematisierter Darstellung und
Fig. 8 ein Fräswerkzeug mit Schneidplatten nach den Fig. 3a, 3b, 3c in einer schematischen und teilweise aufgebrochenen Seitenansicht.

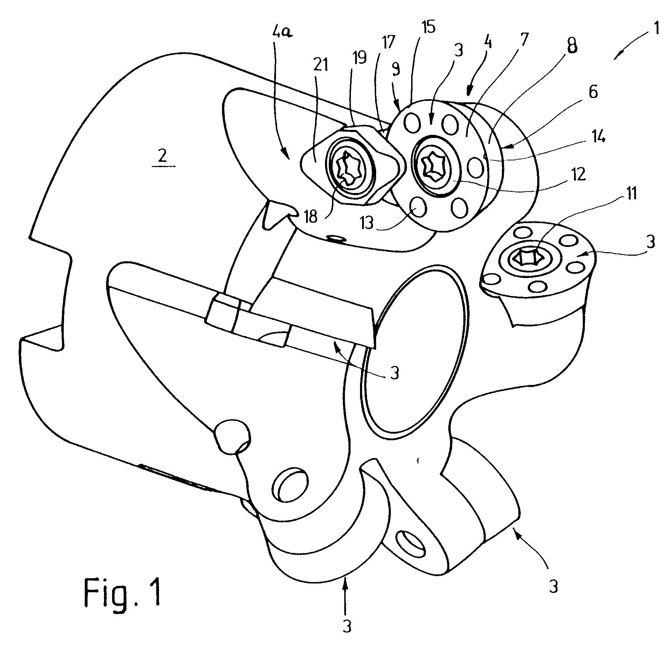

In Fig. 1 ist ein Fräswerkzeug 1 dargestellt, das insgesamt fünf in einem Werkzeugkörper 2 gehaltene Schneidplatten aufweist. Die Schneidplatten 3 sind stirnseitig in entsprechenden jeweils einen Plattensitz bildenden Aufnahmetaschen 4 des Werkzeugkörpers 2 angeordnet. Die Schneidplatten stehen stirnseitig und seitlich über den ansonsten im wesentlichen zylindrischen Werkzeugkörper 2 über. Die Schneidplatten 3 sind als Rundplatten ausgebildete Positivplatten. Außerdem sind sie mit einem jeweils positiven Radial- und Axialwinkel in dem Werkzeugkörper 2 gehalten. Dieses Fräswerkzeug 1 ist vielseitig verwendbar und eignet sich zum Planfräsen, Schrägfräsen, Zirkularfräsen und zum Bohrfräsen.

Jede Schneidplatte 3 ist im wesentlichen kegelstumpfförmig ausgebildet und weist einen mit einer planen kreisförmigen Grundfläche 6, einer im Abstand zu dieser liegenden, ebenfalls kreisförmigen Oberseite 7 und einer auf einem Kegelmantel liegenden Seltenfläche 9 versehenen Grundkörper 8 auf. Der Grundkörper 8 der Schneidplatte 3 ist mittig mit einer zentral durchgehenden Öffnung 11 versehen, in der eine in den Werkzeugkörper 2 eingeschraubte Befestigungsschraube 12 sitzt, die die Schneidplatte 3 in der Aufnahmetasche 4 hält.

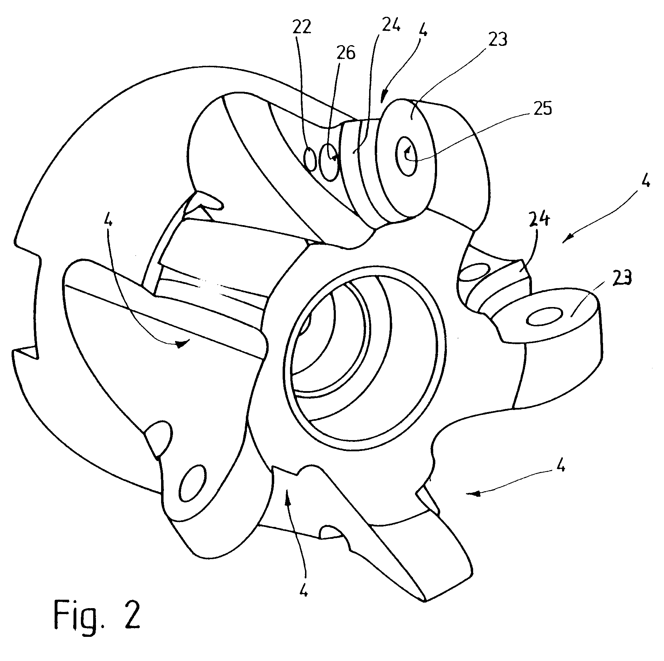

Zur drehfesten Sicherung der Schneidplatte 3 an dem Werkzeugkörper 2 sind in der Oberseite 7 der Schneidplatte 3 insgesamt sechs Mulden 13 vorgesehen, die in einem gewissen Abstand zu einer kreisförmigen Schneidkante 14 liegen, die zwischen der als Freifläche dienenden Seltenfläche 9 und einer in der Oberseite 7 vorgesehenen Spanfläche 15 liegt. In eine der Mulden 13 greift ein konvex ausgebildetes Ende 17 einer mittels einer weiteren Befestigungsschraube 18 an dem Werkzeugkörper 2 befestigten Spannpratze 19 ein. Diese steht über ihr Ende 17 mit der Schneidplatte 3 formschlüssig in Verbindung. Die Spannpratze 19 ist ihrerseits formschlüssig mit dem Werkzeugkörper 2 verbunden, wozu ihr dem Ende 17 gegenüberliegendes Ende 21 mit einem konvexen Abschnitt in eine entsprechende aus Fig. 2 ersichtliche Öffnung 22 eingreift. Es sind auch Ausführungsformen denkbar, bei denen die Spannpratze 19 zumindest mit ihrem Abschnitt 21 in einer entsprechenden Vertiefung des Spanraumes 4a wenigstens teilweise aufgenommen ist. Auf diese Weise wird ein Verdrehen der Spannpratze 19 um ihre Befestigungsschraube 18 auch dann verhindert, wenn sie sich mit ihrem Abschnitt 21 auf einer ebenen Fläche (d.h. ohne Öffnung 22) am Werkzeugkörper 2 abstützt.

Außerdem sind aus Fig. 2 die Aufnahmetaschen 4 besser ersichtlich. Zur direkten Anlage mit der Grundfläche 6 ist in jeder Aufnahmetasche 4 eine kreisförmige, plan ausgebildete Sitzfläche 23 vorgesehen. An diese schließt sich über eine nicht weiter bezeichnete teilzylindrische Fläche eine im Winkel zu ihr stehende, in ihrer Krümmung und Neigung mit der Seitenfläche 9 der Schneidplatte 3 übereinstimmende Anlagefläche 24 an, die in ihrer Umfangserstreckung länger als ein Viertel des Umfanges der Schneidplatte 3 ist. In der Sitzfläche 23 ist zumindest annähernd mittig eine Gewindebohrung 25 zur Aufnahme der Befestigungsschraube 12 angeordnet. Zwischen der Öffnung 22 und der Gewindebohrung 25 ist eine weitere zur Aufnahme der Befestigungsschraube 18 der Spannpratze 19 vorgesehene Gewindebohrung 26 vorgesehen. Diese ist im wesentlichen parallel zu der vorgenannten Gewindebohrung 25. Im übrigen sind die Spanräume 4a als in dem Werkzeugkörper 2 vorgesehene Ausnehmungen so groß ausgebildet, daß eine ausreichende Spanabführung sichergestellt ist.

Die in dem insoweit beschriebenen Fräswerkzeug 1 befestigten Schneidplatten 3 sind doppelt gehalten. Durch die zentrale Befestigungsschraube 12 wird die Schneidplatte 3 mit ihrer Grundfläche 6 gegen die Sitzfläche 23 gepreßt, wobei sich die Seitenfläche 9 infolge eines geringfügigen Versatzes der Achse der Gewindebohrung 25 und der Achse der Öffnung 11 der Schneidplatte 3 fest gegen die Anlagefläche 24 anlegt. Die Position der Schneidplatte 3, insbesondere die sich einstellenden Axial- und Radialwinkel sowie die von der Schneidkante 14 beschriebene Fläche sind dadurch genau festgelegt.

Die in eine der Ausnehmungen 13 greifende Spannpratze 19 steht sowohl mit der Schneidplatte 3 als auch über die Öffnung 22 mit dem Werkzeugkörper 2 formschlüssig in Verbindung. Sie verhindert ein Verdrehen der Schneidplatte 3 um eine durch die Befestigungsschraube 12 definierte Längsmittelachse der Schneidplatte 3. Wenn beim Zerspanen eine Kraftkomponente auftritt, die in Richtung des Umfanges der Schneidplatte 3 wirkt, wird das dadurch entstehende Drehmoment von der Spannpratze 19 aufgenommen und in den Werkzeugkörper 2 abgeleitet. Die Schneidplatte 3 ist dadurch gegen Verdrehen gesichert, wodurch auch die Befestigungsschraube 12 weder gelockert noch übermäßig fest angezogen wird.

Die Spannpratze 19 übt bei fest angezogener Befestigungsschraube 18 eine erhebliche Kraft auf die Oberseite 7 der Schneidplatte 3 aus. Diese Kraft wirkt etwa senkrecht auf die Oberseite 7 und damit auch senkrecht zu der Sitzfläche 23. Diese Kraft wirkt jeglicher Kippneigung entgegen, so daß ein bereichsweises Abheben der Grundfläche von der Sitzfläche (Kippen) vermieden wird. Das bedeutet, daß auch sehr starke, an der aktiven Schneidkante 14 angreifende Kräfte kompensiert werden. Solche Kräfte können ansonsten in ungünstigen Fällen, insbesondere, wenn sie intermittierend auftreten, wie es bei der Schruppzerspanung der Fall ist, sowie in Fällen, in denen die Schneidplatte 3 nicht in dauernden Eingriff mit dem Werkstück steht, zu einer einseitigen Belastung der Schneidplatte 3 und damit zum Kippen der Schneidplatte 3 um eine quer zu der Befestigungsschraube 12 liegende Achse führen. Dies wird durch eine gewisse Elastizität und Nachgiebigkeit der Befestigungsschraube 12 möglich. Durch die Spannpratze 19 wird die Steifigkeit der Plattenbefestigung soweit erhöht, daß solches Kippen der Schneidplatte 3 sicher ausgeschlossen wird.

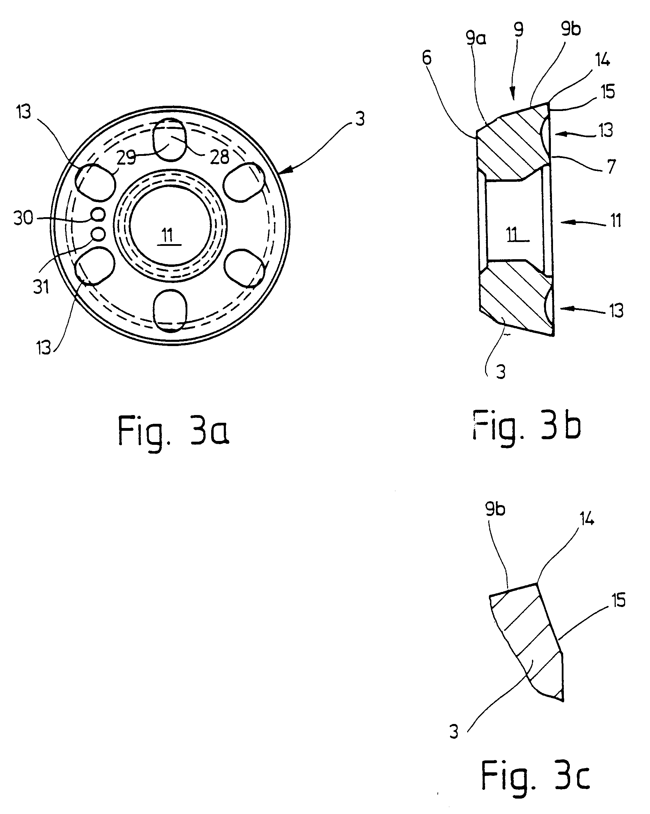

In den Fig. 3a, 3b und 3c ist die Schneidplatte 3 gesondert dargestellt. Die Grundfläche 6 ist plan und ringförmig ohne jegliche Unterbrechung ausgeführt. Parallel und im Abstand zu der Grundfläche 6 liegt auf der Gegenseite des Grundkörpers 8 die ebenfalls plan ausgebildete Oberseite 7. Die Seitenfläche 9 ist zweigeteilt und weist einen sich an die Grundfläche 6 anschließenden Seitenflächenabschnitt 9a auf, der bei einer parallel zu der Grundfläche 6 liegenden ringförmigen Kante in einen Seitenflächenabschnitt 9b übergeht, der mit dem Seitenflächenabschnitt 9a einen stumpfen, zur Schneidplattenmitte hin geöffneten Winkel einschließt.

In der Oberseite 7 sind im Anschluß an die an die Schneidkante 14 grenzende Spanflache 15 die Mulden 13 angeordnet, die sich in die Spanfläche 15 hinein erstrecken. Die Mulden 13 sind, wie aus Fig. 3a hervorgeht, in Winkelabständen von jeweils 60° zueinander angeordnet. Jede Mulde 13 ist oval und durch zwei einander gegenüberliegende halbkreisförmige Abschnitte sowie zwei parallel zueinander verlaufende diese verbindende Seltenabschnitte gebildet. Die halbkreisförmigen Abschnitte definieren zwei Krümmungsmittelpunkte 28, 29 die auf einer radial zu der Schneidplatte 3 verlaufenden Geraden liegen.

Um die Einbaulage der Schneidplatte 3 kenntlich machen zu können, sind zwischen zwei Mulden 13 zwei kleinere Vertiefungen 30, 31 angeordnet, die als Marken dienen.

Die in der Fig. 3b im Querschnitt dargestellte Öffnung 11 ist konzentrisch zu dem Grundkörper 8 der Schneidplatte 3 angeordnet und ist von der Grundfläche 6 bis etwa zu der Mitte der Schneidplatte 3 zylindrisch, wobei sie sich dann, ausgehend von der Mitte der Schneidplatte 3, zu der Oberseite 7 hin konisch erweitert. Das ermöglicht es, die Schneidplatte 3 mit der Befestigungsschraube 12, die einen konischen Kopf aufweist, so in den Werkzeugkörper 2 einzusetzen, daß die Seitenfläche 9 fest an die Anlagefläche 24 angedrückt wird. Der konische Abschnitt der Bohrung 11 und der konische Kopf der Befestigungsschraube 12 wirken dann als Keilflächen zusammen.

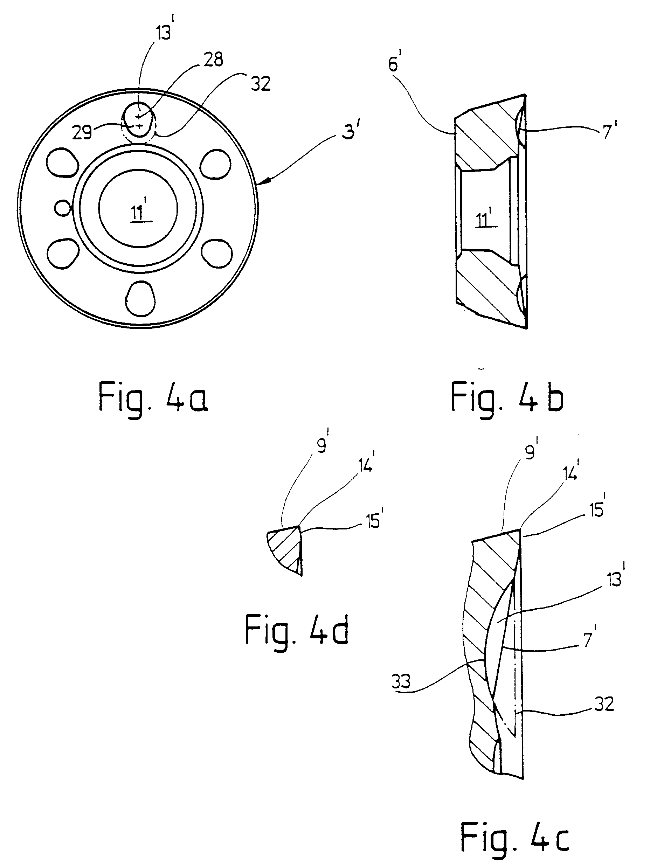

Eine Schneidplatte 3' mit stark positiver Schneidengeometrie ist in den Fig. 4a, 4b, 4c und 4d dargestellt. Diese Schneidplatte 3' erfordert eine geringere Schnittkraft und kann mit hohem Vorschub gefahren werden. Sie stimmt mit der vorstehend beschriebenen Schneidplatte 3 weitgehend überein, so daß ohne erneute Bezugnahme die gleichen zur Kenntlichmachung mit einem Apostroph versehenen Bezugszeichen verwendet werden. Der Unterschied der Schneidplatte 3' zu der vorstehend beschriebenen liegt vor allem darin, daß die Oberseite 7' auf dem Mantel eines stumpfwinkligen Kreiskegels liegt, der sich von der Schneidplatte 3 weg öffnet, wie dies insbesondere aus den Fig. 4b und 4c ersichtlich ist. In unmittelbarer Nachbarschaft der Schneidkante 14' kann, wie aus Fig. 4d hervorgeht, die Oberseite 7' nochmals in Gegenrichtung abgeschrägt sein, so daß an der Schneidkante 14 ungefähr ein rechter Winkel zwischen der Seitenfläche 9' und dem unmittelbar an die Schneidkante 14' angrenzenden Abschnitt der Spanfläche 15' vorhanden ist.

Durch die Neigung der Oberseite 7' gegen die Grundfläche 6' sind die Mulden 13' teilweise angeschnitten, wie durch die strichpunktierten Linien 32 in den Fig. 4a und 4c angedeutet ist. Dadurch erscheinen sie in der Draufsicht in Fig. 4a eiförmig, wobei sie mit ihrem jeweiligen spitzen Ende radial nach innen weisen. Insbesondere aber liegen, wie schon bei der vorstehend beschriebenen Schneidplatte 3, die Krümmungsmittelpunkte 28, 29 auf einer Radialen sowie auf einem Bodenabschnitt 33 der Mulde 13', der parallel zu der Grundfläche 6 liegt.

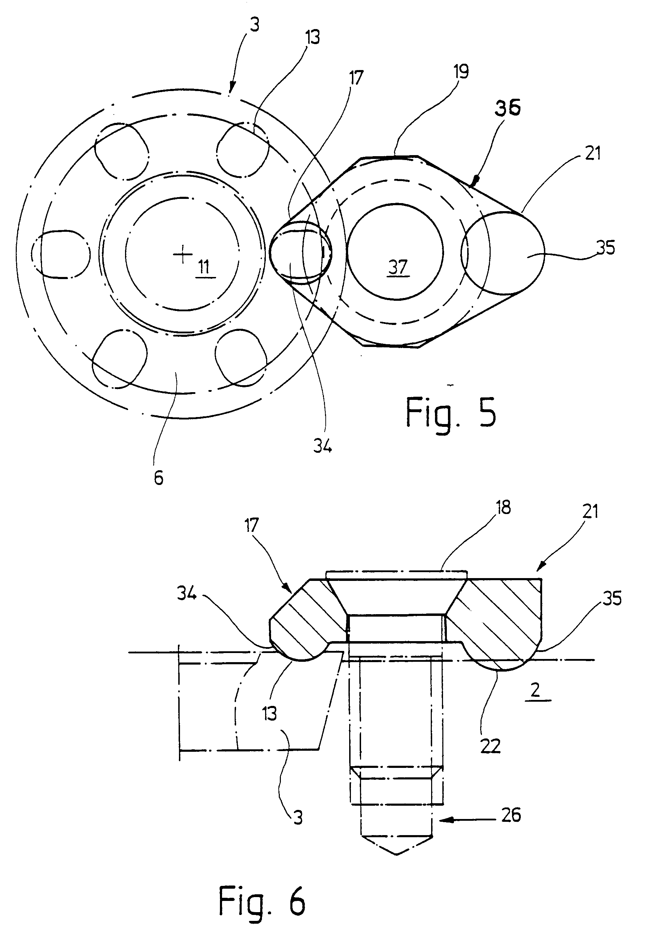

Das Zusammenwirken der Spannpratze 19 mit einer Schneidplatte 3 oder 3' geht aus den Fig. 5 und 6 hervor. In der Fig. 5 ist die einstückig ausgebildete Spannpratze 19 von unten her, d.h. mit Blick auf ihre an den Enden 17, 21 sitzenden sphärisch konvex ausgebildeten Kupplungsabschnitte 34, 35 geführt. Die das Ende 17 sowie den Kupplungsabschnitt 34 an sich verdeckende Schneidplatte 3 liegt mit ihrer Grundfläche 6 zum Betrachter hin und ist mit ihren Kanten lediglich strichpunktiert angedeutet.

Die Spannpratze 19 ist, wie auch aus der Fig. 5 hervorgeht, im wesentlichen durch eine ebene Platte 36 gebildet, die etwa mittig von einer Befestigungsöffnung 37 durchgriffen ist und an der endseitig die Kupplungsabschnitte 34, 35 ausgebildet sind. Die Spannpratze 19 ist dabei in ihren Abmessungen derart ausgelegt, daß sich die Platte 36 mit ihrem Kupplungsabschnitt 34 in der Mulde 13 der Schneidplatte 3 und mit ihrem Kupplungsabschnitt 35 in der Mulde 22 des Werkzeugkörpers 2 abstützt und die von der in der Gewindebohrung 26 sitzenden Befestigungsschraube 18 ausgeübte Spannung auf die Mulde 13 und die Öffnung 22 ableitet und sich damit dort abstützt. Die Platte 36 berührt ansonsten die Schneidplatte und den Werkzeugkörper 2 an keiner anderen Stelle. Damit übt die Spannpratze 19 bei angezogener Befestigungsschraube 18 eine starke Druckkraft auf die Schneidplatte 3 aus. Dadurch wird die Schneidplatte 3 mit ihrer Grundfläche 6 fest gegen die Sitzfläche 23 gedrückt, und zwar, wie aus Fig. 1 hervorgeht, an einer, bezogen auf die Befestigungsschraube 12, dem aktiven Bereich der Schneidkante 14 gegenüberliegenden Seite. Dadurch wird die Schneidplatte 3 festgehalten und jeglicher Kippneigung entgegengewirkt.

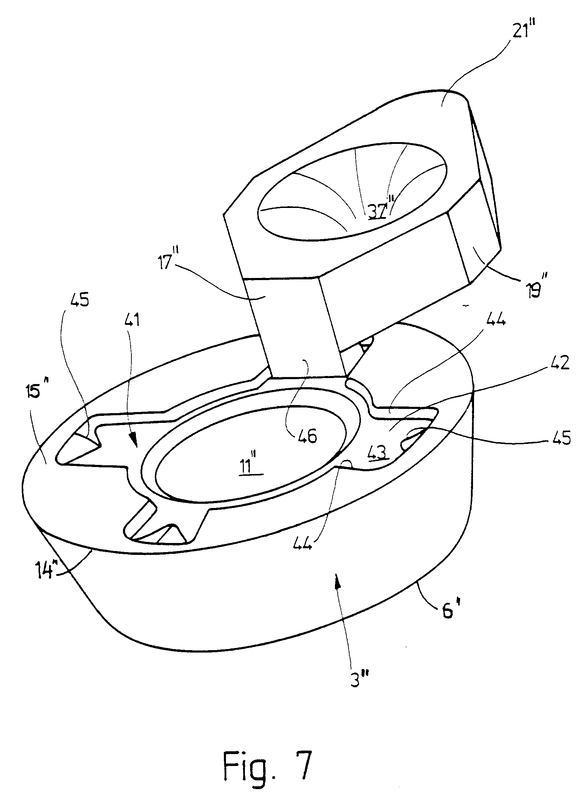

In der Fig. 7 ist eine Schneidplatte 3'' in einer anderen Ausführungsform dargestellt. Diese unterscheidet sich von der vorstehend beschriebenen Schneidplatte 3 dadurch, daß als Kupplungsmittel zur formschlüssigen Kupplung der Schneidplatte 3 mit dem Werkzeugkörper 2 anstelle der Ausnehmung 13 lediglich eine zu der Öffnung 11'' konzentrisch liegende Ausnehmung 41 vorgesehen ist, die sich radial nach außen erstreckende, im Abstand von jeweils 90° zueinander angeordnete Ausläufer 42 aufweist. Ein solcher Ausläufer 42 ist in Draufsicht ungefähr rechteckig und weist einen parallel zu der Grundfläche 6'' liegenden Boden 43 auf. In Umfangsrichtung ist der Ausläufer 42 parallelflankig durch im Abstand gegenüberliegende Seitenwände 44 begrenzt. Zur Aussteifung und insbesondere zum Ableiten der an der Schneidkante 14'' angreifenden Schnittkräfte kann der sich in radialer Richtung nach außen erstreckende Ausläufer mit einer sich über den Boden 43 erhebenden Rippe 45 versehen sein, die, ausgehend von der Spanfläche 15'', auf dem Boden 43 gegen diesen geneigt nach innen zu verläuft.

Die der Schneidplatte 3'' zugeordnete Spannpratze 19'' weist als Kupplungsabschnitt bei ihrem Ende 17'' einen dem Ausläufer 42 entsprechend ausgebildeten Vorsprung 46 auf.

Auch mit dieser Ausführungsform ist eine formschlüssige Sicherung der Schneidplatte 3'' in dem Werkzeugkörper 2 möglich, wobei der an dem Ende 21'' der Spannpratze 19'' vorgesehene Kupplungsabschnitt, wie bei den vorstehend beschriebenen Ausführungsbeispielen, beispielsweise sphärisch gewölbt ausgebildet sein kann. Sobald die Schneidplatte 3'' auch nur einer geringfügigen Drehung unterliegt, wird die Spannpratze 19'' mitgedreht, wobei der entsprechende sphärisch gewölbte Kupplungsabschnitt an dem Ende 21'' dann in der entsprechenden Öffnung 22 des Werkzeugkörpers 2 ein Stück weit verschoben wird und somit einer Keilwirkung unterliegt, die das Ende 21'' gegenüber dem Werkzeugkörper 2 anhebt. Die Spannpratze 19'' wirkt nun wie ein zweiarmiger Hebel mit dem Drehpunkt bei der Befestigungsschraube 18 und der Öffnung 37'', wodurch das Ende 17'' mit dem Vorsprung 46 fest auf den Boden 43 der Ausnehmung 41 drückt. Dadurch wird die Schneidplatte 3'' zusätzlich gehalten.

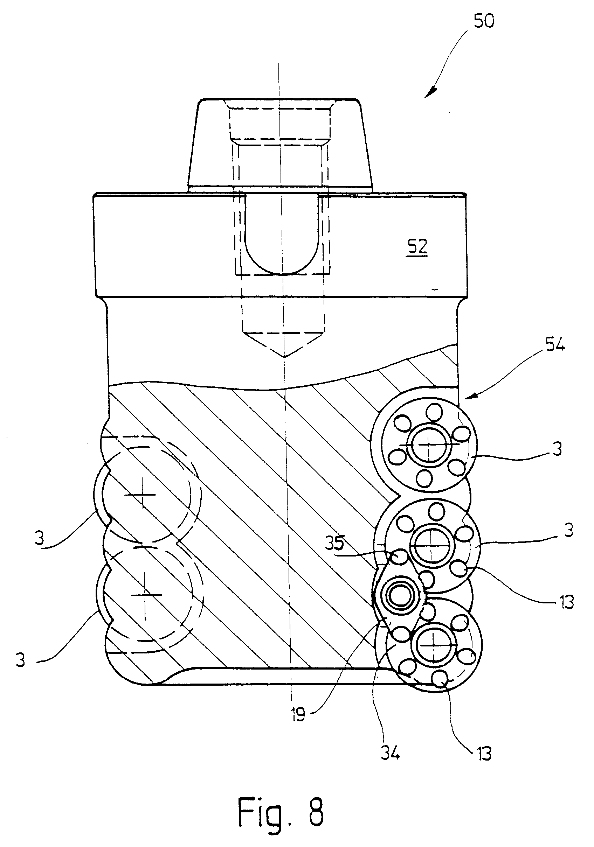

In der Fig. 8 ist ein Fräswerkzeug 50 dargestellt, dessen Schneidplatten 3 in in einem zylindrischen Werkzeugkörper 52 vorgesehenen Aufnahmetaschen 54 angeordnet sind. Die Aufnahmetaschen 54 sind in dem Werkzeugkörper 2 vorgesehene Schraubennuten mit großer Steigung. Jede Aufnahmetasche 54 enthält mehrere Schneidplatten 3. Insbesondere die stirnseitig angeordneten Schneidplatten 3 unterliegen einer starken Drehbeanspruchung. Zur drehfesten Kupplung der endständigen Schneidplatte 3 mit dem Werkzeugkörper 52 ist die Spannpratze 19 zwischen der endständigen Schneidplatte 3 und der benachbarten Schneidplatte 3 angeordnet, wobei die Spannpratze 19 mit ihrem Kupplungsabschnitt 34 in eine der an der endständigen Platte vorgesehenen Mulden 13 und mit ihrem Kupplungsabschnitt 35 in eine Mulde 13 der benachbarten Schneidplatte 3 greift. Dadurch sind sowohl die endständige Schneidplatte 3 als auch die dieser benachbarte Schneidplatte 3 drehfest mit dem Werkzeugkörper 52 verbunden. Außerdem aber ermöglicht es diese Lösung, die beiden Schneidplatten 3 sehr dicht beieinander anzuordnen, so daß lediglich geringe Zwischenräume frei bleiben. Außerdem wird eine Schwächung des Werkzeugkörpers 52 durch zusätzliche Aussparungen zur Aufnahme der Spannpratzen 19 vermieden.

## Patentansprüche

1. Schneidplatte (3) für ein Zerspanungswerkzeug (1),
mit einem Grundkörper (8), der von einer Grundfläche (6), einer dieser im Abstand gegenüberliegenden Oberseite (7) und einer Seitenfläche (9) begrenzt ist,
mit einer an der Oberseite (7) vorgesehenen Spanfläche (15), die mit der Seitenfläche (9) eine Schneidkante (14) definiert,
mit einer koaxial durch den Grundkörper (8) gehenden Öffnung (11) zur Aufnahme eines Befestigungsmittels (12), das den Grundkörper (8) mit seiner Grundfläche (6) gegen eine an dem Zerspanungswerkzeug (1) vorgesehene Sitzfläche (23) drückt und
mit einem an der Oberseite (7) vorgesehenen formschlüssigen Kupplungsmittel (13) zur drehfesten Sicherung der Schneidplatte (3) in dem Zerspanungswerkzeug (1).

2. Schneidplatte nach Anspruch 1, dadurch gekennzeichnet, daß der Grundkörper (8) in einem zwischen der Grundfläche (6) und der Oberseite (7) liegenden Bereich einen wenigstens abschnittsweise kreisförmigen Querschnitt aufweist, der parallel zu der Grundfläche (6) liegt.

3. Schneidplatte nach Anspruch 1, dadurch gekennzeichnet, daß der Grundkörper (8) einen zwischen der Grundfläche (6) und der Oberseite (7) liegenden kreisförmigen Querschnitt aufweist.

4. Schneidplatte nach Anspruch 1, dadurch gekennzeichnet, daß ein an der Oberseite (7) liegender, durch die Schneidkante (14) begrenzter Querschnitt kreisförmig ist.

5. Schneidplatte nach Anspruch 1, dadurch gekennzeichnet, daß die Grundfläche (6) kreisförmig ist.

6. Schneidplatte nach Anspruch 1, dadurch gekennzeichnet, daß der Grundkörper (8) im wesentlichen kegelstumpfförmig ist.

7. Schneidplatte nach Anspruch 1, dadurch gekennzeichnet, daß die Grundfläche (6) parallel zu der Oberseite (7) ist.

8. Schneidplatte nach Anspruch 1, dadurch gekennzeichnet, daß die Grundfläche (6) plan Ist.

9. Schneidplatte nach Anspruch 1, dadurch gekennzeichnet, daß die Spanfläche (15) eine sich an die Schneidkante (14) anschließende kreisringförmige Fläche ist.

10. Schneidplatte nach Anspruch 1, dadurch gekennzeichnet, daß die Spanfläche (15) plan ist.

11. Schneidplatte nach Anspruch 1, dadurch gekennzeichnet, daß die Spanfläche (15) auf einem Mantel eines Kreiskegels liegt und mit der Oberseite (7) einen spitzen Winkel einschließt.

12. Schneidplatte nach Anspruch 1, dadurch gekennzeichnet, daß die Spanfläche (15) sphärisch gewölbt ist.

13. Schneidplatte nach Anspruch 1, dadurch gekennzeichnet, daß das Kupplungsmittel (13) wenigstens eine an der Oberseite (7) des Grundkörpers (8) vorgesehene Ausnehmung (13) beinhaltet.

14. Schneidplatte nach Anspruch 1, dadurch gekennzeichnet, daß das Kupplungsmittel wenigstens einen an der Oberseite (7) des Grundkörpers (8) vorgesehenen Vorsprung beinhaltet.

15. Schneidplatte nach Anspruch 1, dadurch gekennzeichnet, daß das Kupplungsmittel (13) derart ausgebildet ist, daß die Schneidplatte (3) in mehreren, sich voneinander durch eine Drehung um eine senkrecht auf der Ebene der Grundfläche (6) stehenden Symmetrieachse unterscheidenden Drehstellungen drehfest an dem Zerspanungswerkzeug gesichert werden kann.

16. Schneidplatte nach Anspruch 13 oder 14, dadurch gekennzeichnet, daß das Kupplungsmittel (13) eine Gruppe voneinander beabstandeter Ausnehmungen (13) oder Vorsprünge enthält.

17. Schneidplatte nach Anspruch 16, dadurch gekennzeichnet, daß die Ausnehmungen (13) oder Vorsprünge auf einem konzentrisch zu der Symmetrieachse liegenden Kreis angeordnet sind.

18. Schneidplatte nach Anspruch 16, dadurch gekennzeichnet, daß die Ausnehmungen (13) oder Vorsprünge bezüglich der Symmetrieachse untereinander gleiche Winkel einschließen.

19. Schneidplatte nach Anspruch 18, dadurch gekennzeichnet, daß insgesamt sechs Ausnehmungen (13) oder Vorsprünge vorgesehen sind, wobei die Winkel zwischen einander benachbarten Ausnehmungen (13) oder Vorsprüngen jeweils 60° betragen.

20. Schneidplatte nach Anspruch 1, dadurch gekennzeichnet, daß das Kupplungsmittel (13) wenigstens abschnittsweise in der Spanfläche (15) angeordnet ist.

21. Schneidplatte nach Anspruch 13, dadurch gekennzeichnet, daß die Ausnehmung (13) in einer parallel zu der Grundfläche (6) liegenden Ebene oval ist.

22. Schneidplatte nach Anspruch 21, dadurch gekennzeichnet, daß die ovale Ausnehmung (13) eine Längsmittelachse (28, 29) aufweist, die sich radial zu dem Grundkörper (8) erstreckt.

23. Schneidplatte nach Anspruch 13, dadurch gekennzeichnet, daß die Ausnehmung (13) mit einem stumpfen Winkel in die übrige Oberseite (7) des Grundkörpers (8) übergeht.

24. Schneidplatte nach Anspruch 13, dadurch gekennzeichnet, daß die Ausnehmung (13) sphärisch konkav gewölbt ist.

25. Schneidplatte nach Anspruch 1, dadurch gekennzeichnet, daß das Kupplungsmittel eine konzentrisch zu dem Grundkörper (8) angeordnete Ausnehmung (41) ist.

26. Schneidplatte nach Anspruch 25, dadurch gekennzeichnet, daß die Ausnehmung (41) quer zu der Umfangsrichtung des Grundkörpers (8) orientierte Seitenwände (44) aufweist.

27. Schneidplatte nach Anspruch 1, dadurch gekennzeichnet, daß die Schneidplatte (3) wenigstens eine die die Identifizierung seiner Drehstellung gestattende Einrichtung (30, 31) aufweist.

28. Zerspanungswerkzeug (1)
mit einem Werkzeugkörper (2), der wenigstens eine Aufnahmetasche (4) mit einer Sitzfläche (23) aufweist,
mit einer an der Sitzfläche (23) aufgenommenen Schneidplatte (3) nach einem der Ansprüche 1 bis 26
und mit einem drehfest mit dem Werkzeugkörper (2) verbindbaren Sicherungsmittel (19), das mit dem an der Schneidplatte (3) vorgesehenen Kupplungsmittel (13) in Eingriff bringbar ist.

29. Zerspanungswerkzeug nach Anspruch 28, dadurch gekennzeichnet, daß das Sicherungsmittel (19) an seiner der Schneidplatte (3) zugewandten Seite (17) einen zu dem Kupplungsmittel (13) komplementär ausgebildeten Abschnitt (34) aufweist.

30. Zerspanungswerkzeug nach Anspruch 28 und 29, dadurch gekennzeichnet, daß das Sicherungsmittel eine Spannpratze (19) mit einer zentralen Befestigungsöffnung (37) ist, neben der auf einer Seite (17) der komplementär zu dem Kupplungsmittel (13) ausgebildelte Abschnitt (34) und an der Gegenseite ein formschlüssig mit dem Werkzeugkörper (2) oder einer anderen Schneidplatte (3) zusammenwirkender Abschnitt vorgesehen ist.

31. Zerspanungswerkzeug nach Anspruch 28, dadurch gekennzeichnet, daß das Zerspanungswerkzeug (1) ein Fräswerkzeug (1) ist.

## Claims

1. Cutting insert (3) for a machining tool (1),
with a base body (8), which is defined by a base surface (6), an upper side (7) spaced opposite this and a side face (9),
with a cutting face (15) provided on the upper side (7) which defines a cutting edge (14) with the side face (9),
with an opening (11) passing coaxially through the base body (8) to receive a fastening means (12), which presses the base body (8) with its base surface (6) against a seat face (23) provided on the machining tool (1), and
with a positive coupling means (13) provided on the upper side (7) to secure the cutting insert (3) against rotation in the machining tool (1).

2. Cutting insert according to Claim 1, characterised in that in a region lying between the base surface (6) and the upper side (7), the base body (8), at least in sections, has a circular cross-section lying parallel to the base surface (6).

3. Cutting insert according to Claim 1, characterised in that the base body (8) has a circular cross-section lying between the base surface (6) and the upper side (7).

4. Cutting insert according to Claim 1, characterised in that a cross-section lying on the upper side (7) and defined by the cutting edge (14) is circular.

5. Cutting insert according to Claim 1, characterised in that the base surface (6) is circular.

6. Cutting insert according to Claim 1, characterised in that the base body (8) is essentially in the shape of a truncated cone.

7. Cutting insert according to Claim 1, characterised in that the base surface (6) is parallel to the upper side (7).

8. Cutting insert according to Claim 1, characterised in that the base surface (6) is plane.

9. Cutting insert according to Claim 1, characterised in that the cutting face (15) is a circular-ring-shaped face adjoining the cutting edge (14).

10. Cutting insert according to Claim 1, characterised in that the cutting face (15) is plane.

11. Cutting insert according to Claim 1, characterised in that the cutting face (15) lies on an envelope of a circular cone and encloses an acute angle with the upper aide (7).

12. Cutting insert according to Claim 1, characterised in that the cutting face (15) is spherically arched.

13. Cutting insert according to Claim 1, characterised in that the coupling means (13) contains at least one recess (13) provided on the upper side (7) of the base body (8).

14. Cutting insert according to Claim 1, characterised in that the coupling means contains at least one projection provided on the upper side (7) of the base body (8).

15. Cutting insert according to Claim 1, characterised in that the coupling means (13) is constructed such that the cutting insert (3) can be secured against rotation on the machining tool in several rotational positions differing from one another by a rotation around an axis of symmetry standing perpendicular on the plane of the base surface (6).

16. Cutting insert according to Claim 13 or 14, characterised in that the coupling means (13) contains a group of recesses (13) or projections spaced apart from one another.

17. Cutting insert according to Claim 16, characterised in that the recesses (13) or projections are arranged on a circle lying concentrically to the axis of symmetry.

18. Cutting insert according to Claim 16, characterised in that the recesses (13) or projections enclose the same angles relative to one another with respect to the axis of symmetry.

19. Cutting insert according to Claim 18, characterised in that a total of six recesses (13) or projections are provided, whereby the angles between adjacent recesses (13) or projections amount respectively to 60°.

20. Cutting insert according to Claim 1, characterised in that the coupling means (13) is arranged, at least in sections, in the cutting face (15).

21. Cutting insert according to Claim 13, characterised in that the recess (13) is oval in a plane lying parallel to the base surface (6).

22. Cutting insert according to Claim 21, characterised in that the oval recess (13) has a longitudinal centre axis (28, 29) which extends radially to the base body (8).

23. Cutting insert according to Claim 13, characterised in that the recess (13) merges into the rest or the upper side (7) of the base body (8) at an obtuse angle.

24. Cutting insert according to Claim 13, characterised in that the recess (13) is arched spherically concave.

25. Cutting insert according to Claim 1, characterised in that the coupling means is a recess (41) arranged concentrically to the base body (8).

26. Cutting insert according to Claim 25, characterised in that the recess (41) has side walls (44) oriented transversely to the peripheral direction of the base body (8).

27. Cutting insert according to Claim 1, characterised in that the cutting insert (3) has at least one means (30, 31) permitting identification of a rotational position.

28. Machining tool (1)
with a tool body (2) having at least one receiving cavity (4) with a seat face (23),
with a cutting insert (3) according to one of Claims 1 to 26, which is received in the seat face (23),
and with a securing means (19), which can be connected to the tool body (2) and brought into engagement with the coupling means (13) provided on the cutting insert (3).

29. Machining tool according to claim 28, characterised in that the securing means (19) has a complementary section to the coupling means (13) on its side (17) facing the cutting insert (3).

30. Machining tool according to claim 28 and 29, characterised in that the securing means is a clamping segment (19) with a central fastening opening (37), next to which a section cooperating positively with the tool body (2) or another cutting insert (3) is provided on a side (17) of the sections (34) complementary to the coupling means (13) and on the opposing side.

31. Machining tool according to Claim 28, characterised in that the machining tool (1) is a milling tool (1).

## Revendications

1. Plaquette de coupe (3) pour un outil d'usinage (1), comprenant
- un corps de base (8) délimité par une surface de base (6), un côté supérieur (7) qui se trouve opposé à distance de la surface de base, et une surface latérale (9),
- une surface de coupe (15) prévue sur le côté supérieur (7) et définissant une arête de coupe (14) avec la surface latérale (9),
- une ouverture (11) traversant coaxialement le corps de base (8) pour le passage d'un moyen de fixation (12) qui serre le corps de base (8) par sa surface de base (6) contre une surface d'appui (23) prévue sur l'outil d'usinage (1), et
- un moyen d'accouplement (13) par complémentarité de forme, prévu sur le côté supérieur (7) en vue de l'immobilisation angulaire de la plaquette de coupe (3) dans l'outil d'usinage (1).

2. Plaquette de coupe suivant la revendication 1, **caractérisée** par le fait que le corps de base (8) présente, dans une zone située entre la surface de base (6) et le côté supérieur (7), une section au moins en partie circulaire située parallèlement à la surface de base (6).

3. Plaquette de coupe suivant la revendication 1, **caractérisée** par le fait que le corps de base (8) présente une section circulaire située entre la surface de base (6) et le côté supérieur (7).

4. Plaquette de coupe suivant la revendication 1, **caractérisée** par le fait qu'une section située sur le côté supérieur (7) et délimitée par l'arête de coupe (14) est de forme circulaire.

5. Plaquette de coupe suivant la revendication 1, **caractérisée** par le fait que la surface de base (6) est circulaire.

6. Plaquette de coupe suivant la revendication 1, **caractérisée** par le fait que le corps de base (8) est essentiellement tronconique.

7. Plaquette de coupe suivant la revendication 1, **caractérisée** par le fait que la surface de base (6) est parallèle au côté supérieur (7).

8. Plaquette de coupe suivant la revendication 1, **caractérisée** par le fait que la surface de base (6) est plane.

9. Plaquette de coupe suivant la revendication 1, **caractérisée** par le fait que la surface de coupe (15) est une surface en forme de couronne circulaire se raccordant à l'arête de coupe (14).

10. Plaquette de coupe suivant la revendication 1, **caractérisée** par le fait que la surface de coupe (15) est plane.

11. Plaquette de coupe suivant la revendication 1, **caractérisée** par le fait que la surface de coupe (15) est située sur une enveloppe de cône circulaire et fait un angle aigu avec le côté supérieur (7).

12. Plaquette de coupe suivant la revendication 1, **caractérisée** par le fait que la surface de coupe (15) est bombée de façon sphérique.

13. Plaquette de coupe suivant la revendication 1, **caractérisée** par le fait que le moyen d'accouplement (13) comprend au moins un évidement (13) prévu sur le côté supérieur (7) du corps de base (8).

14. Plaquette de coupe suivant la revendication 1, **caractérisée** par le fait que le moyen d'accouplement comprend au moins une saillie prévue sur le côté supérieur (7) du corps de base (8).

15. Plaquette de coupe suivant la revendication 1, **caractérisée** par le fait que le moyen d'accouplement (13) est réalisé de manière que la plaquette de coupe (3) puisse être immobilisée angulairement sur l'outil d'usinage dans plusieurs positions angulaires qui se distinguent les unes des autres par une rotation autour d'un axe de symétrie perpendiculaire au plan de la surface de base (6).

16. Plaquette de coupe suivant la revendication 13 ou 14, **caractérisée** par le fait que le moyen d'accouplement (13) comprend un groupe d'évidements (13) ou saillies espacés les uns des autres.

17. Plaquette de coupe suivant la revendication 16, **caractérisée** par le fait que les évidements (13) ou saillies sont disposés sur un cercle concentrique à l'axe de symétrie.

18. Plaquette de coupe suivant la revendication 16, **caractérisée** par le fait que les évidements (13) ou saillies font entre eux des angles égaux par rapport à l'axe de symétrie.

19. Plaquette de coupe suivant la revendication 18, **caractérisée** par le fait qu'elle comprend au total six évidements (13) ou saillies, les angles que font les uns avec les autres les évidements (13) ou saillies voisins s'élevant respectivement à 60°.

20. Plaquette de coupe suivant la revendication 1, **caractérisée** par le fait que le moyen d'accouplement (13) est disposé au moins en partie dans la surface de coupe (15).

21. Plaquette de coupe suivant la revendication 13, **caractérisée** par le fait que l'évidement (13) présente une forme ovale dans un plan parallèle à la surface de base (6).

22. Plaquette de coupe suivant la revendication 21, **caractérisée** par le fait que l'évidement ovale (13) présente un axe longitudinal (28, 29) qui s'étend radialement par rapport au corps de base (8).

23. Plaquette de coupe suivant la revendication 13, **caractérisée** par le fait que l'évidement (13) se raccorde par un angle obtus à la partie restante du côté supérieur (7) du corps de base (8).

24. Plaquette de coupe suivant la revendication 13, **caractérisée** par le fait que l'évidement (13) est bombé de façon sphériquement concave.

25. Plaquette de coupe suivant la revendication 1, **caractérisée** par le fait que le moyen d'accouplement est un évidement (41) disposé concentriquement par rapport au corps de base (8).

26. Plaquette de coupe suivant la revendication 25, **caractérisée** par le fait que l'évidement (41) présente des parois latérales (44) orientées transversalement à la direction circonférencielle du corps de base (8).

27. Plaquette de coupe suivant la revendication 1, **caractérisée** par le fait que la plaquette de coupe (3) présente au moins un dispositif (30, 31) permettant l'identification de sa position angulaire.

28. Outil d'usinage (1) comprenant
- un corps d'outil (2) qui présente au moins une alvéole de réception (4) avec une surface d'appui (23),
- une plaquette de coupe (3) suivant l'une des revendications 1 à 26, portant contre la surface d'appui (23), et
- un moyen d'immobilisation (19) pouvant être relié au corps d'outil (2) de manière à être solidaire en rotation de ce dernier et pouvant être amené en prise avec le moyen d'accouplement (13) prévu sur la plaquette de coupe (3).

29. Outil d'usinage suivant la revendication 28, **caractérisé** par le fait que le moyen d'immobilisation (19) présente, sur son côté (17) tourné vers la plaquette de coupe (3), une partie (34) présentant une conformation complémentaire du moyen d'accouplement (13).

30. Outil d'usinage suivant la revendication 28 ou 29, **caractérisé** par le fait que le moyen d'immobilisation est une bride de serrage (19) avec une ouverture de fixation (37) centrale à côté de laquelle sont prévues, sur un côté (17) la partie (34) conformée de façon complémentaire au moyen d'accouplement (13) et sur le côté opposé une partie coopérant par complémentarité de forme avec le corps d'outil (2) ou avec une autre plaquette de coupe (3).

31. Outil d'usinage suivant la revendication 28, **caractérisé** par le fait que l'outil d'usinage (1) est un outil de fraisage (1).
